# EUROPEAN PATENT SPECIFICATION

(11) **EP 3 399 201 B1**
(45) Date of publication and mention of the grant of the patent: **28.08.2024**
(21) Application number: 18169755.8
(22) Date of filing: 27.04.2018
(51) Int. Cl.: F16B 45/02

(54) **IMPROVED CARABINER SYSTEM**
VERBESSERTES KARABINERSYSTEM
SYSTÈME DE MOUSQUETON AMÉLIORÉ

(30) Priority: 03.05.2017 US 201762500515 P; 12.03.2018 US 201815917922
(43) Date of publication of application: 07.11.2018
(73) Proprietor: Black Diamond Equipment Europe GmbH, 6020 Innsbruck (AT)
(72) Inventor: Gompert, Peter, Huntsville, 84317 (US); Terry, Paul, Park City, 84098 (US); Perkins, Brendan, Salt Lake City, 84106 (US)
(74) Representative: Braun, André jr.

(56) References cited:
- EP-A1- 2 851 572
- FR-A1- 2 807 329
- IT-S- 100 813
- JP-A- 2001 020 936
- US-A1- 2009 000 086

## Description

### FIELD OF THE INVENTION

The invention generally relates to mechanical coupling mechanisms such as carabiners, karabiners, and snap-hooks. In particular, the invention relates to an improved carabiner gate system and method of operation.

### RELATED APPLICATIONS

This application claims priority to United States provisional application Serial No. 62/500,515 filed May 3, 2017.

### BACKGROUND OF THE INVENTION

Carabiners, karabiners, snap-hooks, and releasable clamps are used in a variety of applications for releasably coupling objects to one another. For example, a rock climber may use one or more carabiners to releasably secure a rope to a protection device during vertical ascension. Carabiners generally include a frame, a gate, and a releasable gate closure mechanism. The gate is configured to releasably engage the frame so as to form a continuous inner region which can mechanically couple to one or more objects. The releasable gate closure mechanism is configured to allow the gate to be selectively pivoted with respect to the frame in order to facilitate addition or removal of items from the continuous inner region. The releasable gate closure mechanism simultaneously biases the gate toward a closed configuration with respect to the frame so as to maintain mechanical coupling of items within the continuous inner region. A wide variety of frame, gate, and biasing systems exist to specifically accommodate particular applications and/or manufacturing costs for the carabiner.

Wire-gate type carabiners represent a particular gate construction, biasing system, and gate-frame interface. Wire-gate type carabiners for example are known from JP 2001 020936 and US 2009/000086 A1. Wire-gate carabiners utilize a substantially elongated, looped rigid wire member for the gate portion of the carabiner system. A wire member is substantially an elongated metal structure with a circular cross-sectional shape. In general, the lengthwise ends of the wire member gate are oppositely coupled to the frame such that the spring/rebound rigidity of the gate creates the automatic biasing mechanism. As the gate is selectively pivoted about the frame coupling point, the torsional and bending properties of the wire automatically generate a biasing force that mechanically urges the gate back toward the closed configuration. The frame includes a gate interface region which generally includes a hook over which the loop of the gate is configured to extend while in the closed configuration. The reliable positioning of the loop with respect to the hook significantly affects the structural ability of the carabiner to counteract shear forces. Due to the inherent minimal gate thickness, wire-gate type carabiners are usually lighter in overall weight compared to other carabiners. However, the unique requirements and limitations of the gate/frame interface have resulted in an inability to manufacture wire-gate type carabiners for certain applications.

A variety of specialized carabiner designs are configured to include specific mechanical characteristics that optimize particular functionalities. One type of specialized carabiner includes a hookless or keyed engagement coupling scheme between the gate and frame when in the closed configuration. This type of gate/frame engagement scheme optimizes the engagement and disengagement of the carabiner with particular items such as a bolt hanger or a non-sling protection device. One example of such a specialized carabiner is disclosed in FR 2807329 A1. However, structural modifications must be incorporated into the gate/frame interface to maintain the necessary reliable coupling between the gate and frame in the closed configuration. For example, some form of three-dimensional keyed interface must generally be incorporated to provide the necessary engagement between the gate and frame. The three-dimensional keyed interface increases the reliability of the coupling between the gate and frame without the introduction of a hook structure. Various problems exist with conventional hookless carabiners, including manufacturing cost, susceptibility to debris-related obstruction, durability, and weight. Another carabiner system is known from 100 813 S.

Therefore, there is a need in the industry for a carabiner that overcomes the limitations of existing systems in a cost-efficient manner.

### SUMMARY OF THE INVENTION

A carabiner system according to claim 1 is provided. It particularly relates to an improved carabiner gate system and method of operation. The carabiner system includes a frame and a gate. The frame includes an opening between a pivot region and a keyed region. The keyed region of the frame may be hookless. The gate is pivotably coupled to the frame across the opening to form a continuously enclosed inner region in the closed configuration. The gate is also pivotably coupled about the pivot region of the frame, forming a gap between the gate and frame in an open configuration. The gate further includes a key-lock region, a gate region, and an attachment region which are integrally formed together without any type of coupling between regions.

The gate region includes a plurality of elongated members between the key-lock region and attachment region. The plurality of elongated members may include non-circular cross sections and varying thicknesses and tolerances designed to optimize functionality, weight, and appearance. Alternative embodiments include unique methods of operation and manufacturing.

Embodiments of the present invention represent a significant advance in the field of carabiner systems by combining the functional advantages of hookless coupling between the gate and frame with an optimal integral single component gate. Comparable conventional key-lock carabiner gates generally require multi component gate systems with compression couplings or internal springs. Embodiments of the present invention minimize gate components and avoid coupling weaknesses between gate regions by providing a unique integral gate shape that inherently includes the respective regions for spring biasing, gate structure, and releasable hookless frame coupling.

These and other features of the present invention will be set forth in the appended claims. They will become more fully apparent in the description that follows The features and advantages may be realized and obtained by means of the instruments and combinations pointed out in the appended claims.

### BRIEF DESCRIPTION OF THE DRAWINGS

The following description of the invention can be understood in light of the Figures, which illustrate specific aspects of the invention and are a part of the specification. Together with the following description, the Figures demonstrate and explain the principles of the invention. In the Figures, the physical dimensions may be exaggerated for clarity. The same reference numerals in different drawings represent the same element, and thus their descriptions will be omitted.
Figures 1A-C illustrate a perspective views of a carabiner system in closed and open configurations in accordance with embodiments of the present invention;
Figures 2A-D illustrate views of a carabiner gate in accordance with embodiments of the present invention;
and Figures 3A-C illustrate perspective views of a carabiner system in accordance with embodiments of the present invention.

### DETAILED DESCRIPTION OF THE INVENTION

A carabiner system according to claim 1 is provided. It particularly relates to an improved carabiner gate system and method of operation. The carabiner system includes a frame and a gate. The frame includes an opening between a pivot region and a keyed region. The keyed region of the frame may be hookless. The gate is pivotably coupled to the frame across the opening to form a continuously enclosed inner region in the closed configuration. The gate is also pivotably coupled about the pivot region of the frame, forming a gap between the gate and frame in an open configuration. The gate further includes a key-lock region, a gate region, and an attachment region which are integrally formed together without any type of coupling between regions. The gate region includes a plurality of elongated members between the key-lock region and attachment region. The plurality of elongated members may include non-circular cross sections and varying thicknesses and tolerances designed to optimize functionality, weight, and appearance. Also, while embodiments are described in reference to a carabiner gate system, it will be appreciated that the teachings of the present invention are applicable to other areas including but not limited to methods of operation, methods of manufacturing, etc.

The following terms are defined as follows:

### DEFINITIONS

Integral - A plurality of regions formed together without any type of coupling therebetween. For example, a conventional paperclip has multiple parallel regions without any type of coupling therebetween.

Molded - a member being formed of a single three-dimensional mold. A molded member may include specific sub-regions having particular shapes and functions. For example, a traditional paperclip is a molded metal structure that does not include any form of couplings between the regions.

Hookless - a type of carabiner-gate coupling that does not include any type of hook oriented toward the interior of the enclosed carabiner frame.

Wireless - a structure that is composed of one or more materials that does not include a metal wire.

Pivotably coupled - two components that are coupled in a manner that enables a pivotal movement therebetween.

Continuously enclosed region - a two-dimensional region which is enclosed within a substantially continuous structure.

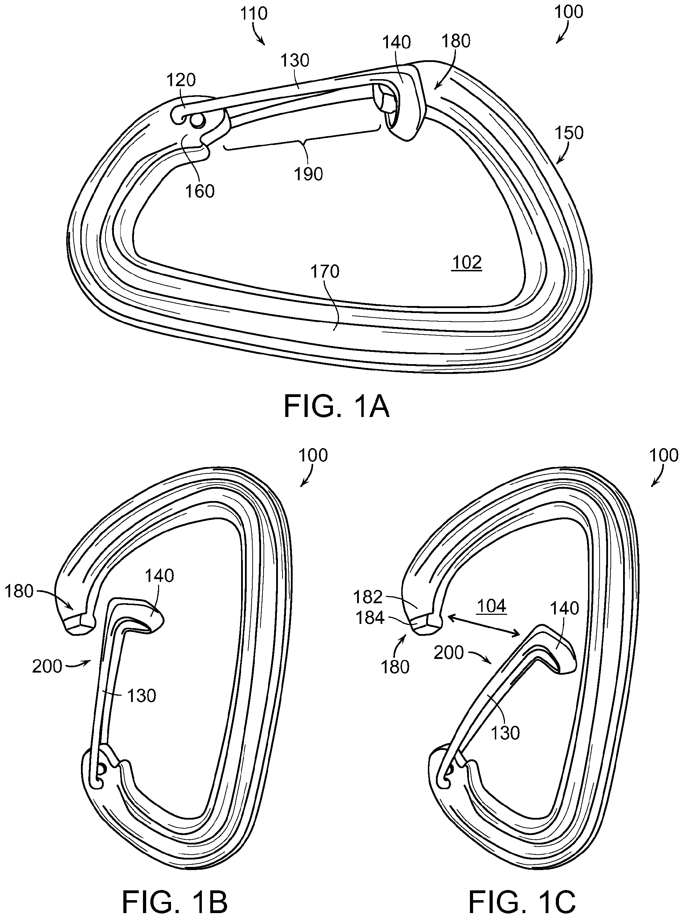

Reference is initially made to Figures 1A-C, which illustrate a carabiner system in the closed (Figure 1A) and open configurations (Figures 1B-C), designated generally at 100. The system 100 includes frame 150 and a gate 110 which are pivotably intercoupled in both open and closed configurations. A continuously enclosed inner region 102 is formed within the frame 150 and gate 110 in the closed configuration (Figure 1A). The continuously enclosed inner region 102 is a substantially two dimensional region enclosed by a mathematically continuous structure (gate and frame). A gap 104 is formed between a portion of the gate 110 and frame 150 in the open configuration (Figures 1B-C). The gap 104 may further be defined as a separation distance between the gate 110 and frame 150.

The frame 150 is a substantially C-shaped structure with a spine region 170 and an opening 190 between a pivot region 160 and a keyed region 180. The frame may be composed of one or more materials, including but not limited to metals and coatings. The frame may include various well known cross sectional shapes so as to optimize weight and strength characteristics, including but not limited to I-beam. It will be appreciated that the various carabiner gate systems discussed in this application may be practiced with a wide variety of carabiner frame structures, styles, and shapes. The keyed region 180 may include a flat parallel region 182 and an orthogonal expanded region 184 as shown in Figure 1C. In preferred embodiments, neither the flat 182 nor expanded regions 184 include any form of hook facing the interior; therefore, the carabiner system 100 may be referred to as hookless. Rather, the combined shape of the flat and expanded regions 182, 184 form a specific male type coupler configured to interface with a correspondingly female shaped region on the gate (discussed below). The male-female hookless coupling between the gate 110 and the frame 150 creates the necessary operational closed-loop functional strengths in the closed configuration.

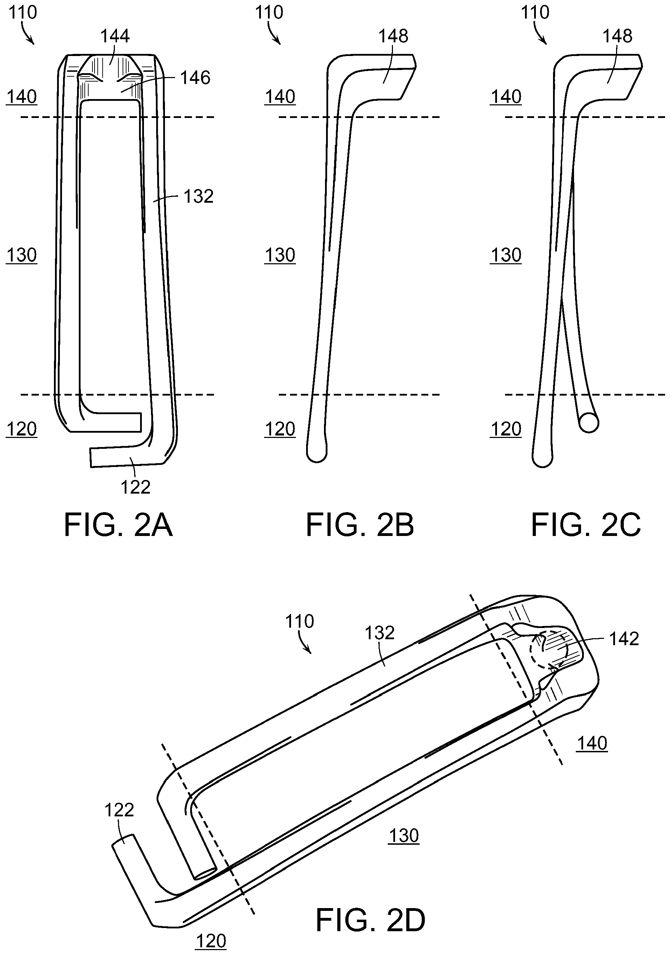

Reference is next made to Figures 2A-D, which illustrate perspective views of the gate, designated generally at 110. The gate 110 includes an attachment region 120, a gate region 130, and a key-lock region 140. The gate 110 is a critical component which may also be referred to as an integral, molded, and/or single-piece member because there are no couplings, unions, or discontinuities between the defined regions of the gate 110. This unique integral nature of the gate 110 provides numerous functional and manufacturing advantages over conventional multi-component or coupled carabiner gate systems. The attachment region 120 of the gate 110 is pivotably coupled to the pivot region 160 of the frame 150 via two substantially orthogonal rotating members 122. The orthogonal rotating members may include circular cross-sectional shapes and may extend into corresponding recesses on the pivot region 160 of the frame 150. The specific independent and offset positioning/orientation of the coupling between the attachment region 120 and the frame 150 in part creates the biasing system which urges the gate 110 towards the closed configuration with respect to the frame 150. The urging of the gate 110 towards the closed configuration may also be described as generating a biasing force which corresponds to the gap 104 distance between the gate 110 and the frame 150. The biasing force may also correspond to the composition and shape of the gate 110, which include a metal material shaped to create the malleable compliant spring functionalities. It is important to note that the composition and shape of the entire gate 110 may contribute to the biasing force which urges the gate 110 toward the closed configuration with respect to the frame 150. The gate region 130 may include two elongated members 132 as shown in the illustrated embodiments. The elongated members may include non-circular cross-sectional shaped regions and/or discontinuous thickness regions. In particular, the elongated members 132 may include oval, rectangular, and/or other non-circular cross-sectional shapes between the attachment region 120 and the key-lock region 140. Likewise, portions of the gate region 130 may include increased or decreased (discontinuous) thicknesses or densities so as to optimize structural integrity, user operation, and/or biasing. For example, high stress regions may be thicker than low stress areas to facilitate durability and operation. The key-lock region 140 includes a first smaller recess 144 and a second larger recess 146 corresponding to the keyed region of the frame (See Figure 2A). The first smaller recess 144 and second larger recess 146 may also be described as defining a partially enclosed three dimensional concave region 142 (See Figure 2D). The illustrated key-lock region 140 includes an externally defined orthogonal substantially rectangular U-shaped region between the elongated members of the gate region (Figures 2B-D). The external U-shaped region defines the first smaller recess 144 corresponding to the flat region 182 of the keyed region 180 of the frame 150 and the second larger recess 146 corresponding to the expanded region 184 of the keyed region 180 of the frame 150.

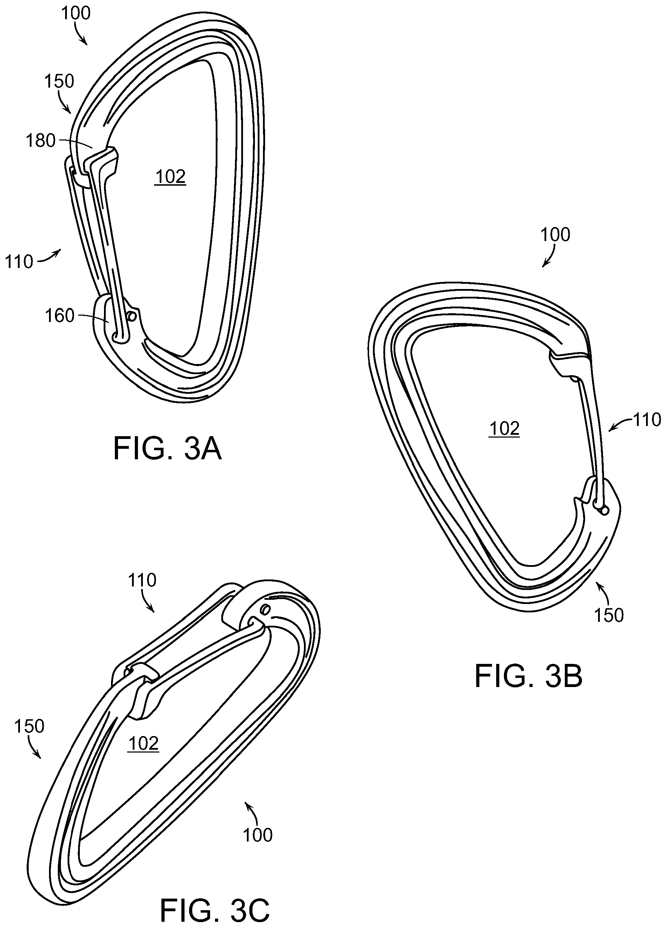

Reference is next made to Figures 3A-C, which illustrate alternative perspective views of the carabiner system in the closed configuration, designated generally at 100.

In operation, a user may selectively transition the carabiner system 100 from the biased default closed configuration (Figure 1A) to the open configuration (Figure 1B-C) by continuously exerting an opening force 200 (Figures 1B-C) upon the gate 110 with respect to the frame 150. The opening force 200 must exceed the biasing force of the biasing system discussed above. In addition, the opening force 200 must be maintained in order to maintain the open configuration of the carabiner system 100. Upon removal of the opening force 200, the gate 110 will pivot about the pivot region 160 of the frame 150 such that the key-lock region 140 couples with the keyed region 180 of the frame 150, thereby reengaging the closed configuration. The coupling of the key-lock region 140 with the keyed region 180 may further include coupling the first smaller recess 144 over the flat parallel region 182 and coupling the second larger recess 146 over the expanded region 184. Alternatively, the coupling of the key-lock region 140 with the keyed region 180 may be described as coupling the male keyed region 180 within the female partially enclosed region 142 of the gate 110.

It should be noted that various alternative system designs may be practiced in accordance with the present invention within the scope of the appended claims. Various other embodiments have been contemplated, including combinations in whole or in part of the embodiments described above.

## Claims

1. A carabiner system (100) comprising:
a frame (150) including an opening (190) between a pivot region (160) and a keyed region (180);
a gate (110) pivotably coupled to the frame (150) across the opening (190), wherein the gate (110) and frame (150) form a continuously enclosed inner region (102) in a closed configuration, and wherein the gate (110) is pivotably rotated about the pivot region (160) forming a gap (104) between the gate (110) and the frame (150) in the open configuration, and wherein the gate (110) further includes a key-lock region (140), a gate region (130), and an attachment region (120);
a gate biasing system between the pivot region (160) of the frame (150) and
the attachment region (120) of the gate (110), wherein the gate biasing system biases the key-lock region (140) of the gate (110) toward the keyed region (180) of the frame (150) in the closed configuration;
wherein the closed configuration includes a coupling between the key-lock region (140) of the gate (110) and the keyed region (180) of the frame (150) in the closed configuration;
wherein the gate region (130) of the gate (110) includes a plurality of independent elongated members (132) extending between the key-lock region (140) and the attachment region (120);
wherein the attachment region (120) is pivotably coupled to the pivot region (160) of the frame (150) in both the open and closed configurations;
wherein the key-lock region(140) includes a partially enclosed concave region (142) corresponding in shape to the keyed region (180) of the frame (150);
**characterized in that**
the key-lock region (140), gate region (130), and attachment region (120) of the gate (110) are integral, wherein the key-lock region (140) of the gate (110) includes an externally defined orthogonal substantially rectangular U-shaped region (148) between the elongated members (132) of the gate region (130).

2. The carabiner system of claim 1, wherein the gate (110) is wireless.

3. The carabiner system of claim 1, wherein the elongated members (132) include only non-circular cross-sectional regions.

4. The carabiner system of claim 1, wherein the regions (120, 130, 140) of the gate (110) are molded.

5. The carabiner system of claim 1, wherein the keyed region (180) of the frame (150) is hookless.

6. The carabiner system of claim 1, wherein the coupling between the key-lock region (140) and the keyed region (180) in the closed configuration includes a male-female coupling.

7. The carabiner system of claim 1, wherein the plurality of elongated members (132) of the gate region (130) include regions of variable thicknesses.

8. The carabiner system of claim 1, wherein the external U-shaped region (148) of the key-lock region (140) of the gate (110) includes a first smaller opening (144) and a second larger opening (146), and wherein the first and second openings correspond in shape to the keyed region (180) of the frame.

9. The carabiner system of claim 8, wherein the first smaller opening (144) is distal to the gate region (130) of the gate (110) with respect to the second larger opening (146).

10. The carabiner system of claim 1, wherein the attachment region (120) of the gate (110) includes two substantially orthogonal regions coupled to the pivot region (160) of the frame (150).

11. The carabiner system of claim 10, wherein the two substantially orthogonal regions are substantially orthogonal to the elongated members (132).

12. The carabiner system of claim 11, wherein the pivotable coupling between the attachment region (120) and the pivot region (160) includes coupling the substantially orthogonal regions of the gate (110) within a plurality of recesses of the frame.

13. The carabiner system of claim 12, wherein the plurality of recesses are offset and disposed on the attachment region (120) of the frame (150).

14. The carabiner system of claim 1, wherein the gate (110) is substantially composed of a single material.

15. The carabiner system of claim 1, wherein the attachment region (120), the gate region (130), and key-lock region (140) of the gate (110) are inter-molded without compression coupling.

16. The carabiner system of claim 1, wherein the gate biasing system is configured to generate a biasing force urging the gate (110) toward the closed configuration.

17. The carabiner system of claim 16, wherein the biasing force corresponds to a distance between the key-lock region (140) of the gate (110) and the keyed region (180) of the frame (150).

18. The carabiner system of claim 1, wherein the key-lock region (140) is hookless, wherein the key-lock region, the gate region and attachment region of the gate are molded.

## Patentansprüche

1. Karabinersystem (100), das Folgendes umfasst:
einen Rahmen (150), der eine Öffnung (190) zwischen einem Schwenkbereich (160) und einem Nasenbereich (180) beinhaltet;
einen Schnapper (110), der über die Öffnung (190) hinweg schwenkbar mit dem Rahmen (150) verbunden ist, wobei der Schnapper (110) und der Rahmen (150) in einer geschlossenen Konfiguration einen durchgehend umschlossenen Innenbereich (102) bilden, und wobei der Schnapper (110) in der offenen Konfiguration schwenkbar um den Schwenkbereich (160) gedreht wird, wodurch ein Spalt (104) zwischen dem Schnapper (110) und dem Rahmen (150) gebildet wird, und wobei der Schnapper (110) ferner einen Keylock-Bereich (140), einen Schnapperbereich (130) und einen Befestigungsbereich (120) beinhaltet;
ein Schnappervorspannsystem zwischen dem Schwenkbereich (160) des Rahmens (150) und dem Befestigungsbereich (120) des Schnappers (110), wobei das Schnappervorspannsystem den Keylock-Bereich (140) des Schnappers (110) in der geschlossenen Konfiguration in Richtung des Nasenbereichs (180) des Rahmens (150) vorspannt;
wobei die geschlossene Konfiguration ein Koppeln zwischen dem Keylock-Bereich (140) des Schnappers (110) und dem Nasenbereich (180) des Rahmens (150) in der geschlossenen Konfiguration beinhaltet;
wobei der Schnapperbereich (130) des Schnappers (110) mehrere unabhängige längliche Elemente (132) beinhaltet, die sich zwischen dem Keylock-Bereich (140) und dem Befestigungsbereich (120) erstrecken;
wobei der Befestigungsbereich (120) mit dem Schwenkbereich (160) des Rahmens (150) sowohl in der offenen als auch in der geschlossenen Konfiguration schwenkbar gekoppelt ist;
wobei der Keylock-Bereich (140) einen teilweise umschlossenen konkaven Bereich (142) beinhaltet, der in seiner Ausprägung mit dem Nasenbereich (180) des Rahmens (150) übereinstimmt; **dadurch gekennzeichnet, dass**
der Keylock-Bereich (140), der Schnapperbereich (130) und der Befestigungsbereich (120) des Schnappers (110) einstückig sind, wobei der Keylock-Bereich (140) des Schnappers (110) einen extern definierten orthogonalen, im Wesentlichen rechteckigen U-förmigen Bereich (148) zwischen den länglichen Elementen (132) des Schnapperbereichs (130) beinhaltet.

2. Karabinersystem nach Anspruch 1, wobei der Schnapper (110) drahtlos ist.

3. Karabinersystem nach Anspruch 1, wobei die länglichen Elemente (132) nur Bereiche von nicht kreisförmigem Querschnitt beinhalten.

4. Karabinersystem nach Anspruch 1, wobei die Bereiche (120, 130, 140) des Schnappers (110) in einer Form hergestellt sind.

5. Karabinersystem nach Anspruch 1, wobei der Nasenbereich (180) des Rahmens (150) hakenlos ist.

6. Karabinersystem nach Anspruch 1, wobei die Kopplung zwischen dem Keylock-Bereich (140) und dem Nasenbereich (180) in der geschlossenen Konfiguration eine männliche-weibliche Kopplung beinhaltet.

7. Karabinersystem nach Anspruch 1, wobei die mehreren länglichen Elemente (132) des Schnapperbereichs (130) Bereiche mit variablen Dicken beinhalten.

8. Karabinersystem nach Anspruch 1, wobei der externe U-förmige Bereich (148) des Keylock-Bereichs (140) des Schnappers (110) eine erste kleinere Öffnung (144) und eine zweite größere Öffnung (146) beinhaltet, und wobei die erste und die zweite Öffnung in der Ausprägung mit dem Nasenbereich (180) des Rahmens übereinstimmen.

9. Karabinersystem nach Anspruch 8, wobei die erste kleinere Öffnung (144) zu dem Schnapperbereich (130) des Schnappers (110) hinsichtlich der zweiten größeren Öffnung (146) distal ist.

10. Karabinersystem nach Anspruch 1, wobei der Befestigungsbereich (120) des Schnappers (110) zwei im Wesentlichen orthogonale Bereiche beinhaltet, die mit dem Schwenkbereich (160) des Rahmens (150) gekoppelt sind.

11. Karabinersystem nach Anspruch 10, wobei die zwei im Wesentlichen orthogonalen Bereiche zu den länglichen Elementen (132) im Wesentlichen orthogonal sind.

12. Karabinersystem nach Anspruch 11, wobei die schwenkbare Kopplung zwischen dem Befestigungsbereich (120) und dem Schwenkbereich (160) das Koppeln der im Wesentlichen orthogonalen Bereiche des Schnappers (110) innerhalb mehrerer Aussparungen des Rahmens beinhaltet.

13. Karabinersystem nach Anspruch 12, wobei die mehreren Aussparungen versetzt und an dem Befestigungsbereich (120) des Rahmens (150) angeordnet sind.

14. Karabinersystem nach Anspruch 1, wobei der Schnapper (110) im Wesentlichen aus einem einzigen Material zusammengesetzt ist.

15. Karabinersystem nach Anspruch 1, wobei der Befestigungsbereich (120), der Schnapperbereich (130) und der Keylock-Bereich (140) des Schnappers (110) ohne Kompressionskoppeln ineinander geformt sind.

16. Karabinersystem nach Anspruch 1, wobei das Schnappervorspannsystem konfiguriert ist, um eine Vorspannkraft zu erzeugen, die den Schnapper (110) in Richtung der geschlossenen Konfiguration drängt.

17. Karabinersystem nach Anspruch 16, wobei die Vorspannkraft mit einem Abstand zwischen dem Keylock-Bereich (140) des Schnappers (110) und dem Nasenbereich (180) des Rahmens (150) übereinstimmt.

18. Karabinersystem nach Anspruch 1, wobei der Keylock-Bereich (140) hakenlos ist, wobei der Keylock-Bereich, der Schnapperbereich und der Befestigungsbereich des Schnappers in einer Form hergestellt sind.

## Revendications

1. Système de mousqueton (100) comprenant :
un cadre (150) comportant une ouverture (190) entre une région de pivot (160) et une région à clavette (180) ;
une porte (110) accouplée de manière pivotante au cadre (150) à travers l'ouverture (190), dans lequel la porte (110) et le cadre (150) forment une région intérieure fermée en continu (102) dans une configuration fermée, et dans lequel la porte (110) est pivotée sur la région de pivot (160) formant un espace (104) entre la porte (110) et le cadre (150) dans la configuration ouverte, et dans lequel la porte (110) comporte en outre une région de verrouillage à clé (140), une région de porte (130) et une région de fixation (120) ;
un système de sollicitation de porte entre la région de pivot (160) du cadre (150) et la région de fixation (120) de la porte (110), dans lequel le système de sollicitation de porte sollicite la région de verrouillage à clé (140) de la porte (110) vers la région à clavette (180) du cadre (150) et la configuration fermée ;
dans lequel la configuration fermée comporte un accouplement entre la région de verrouillage à clé (140) de la porte (110) et la région à clavette (180) du cadre (150) dans la configuration fermée ;
dans lequel la région de porte (130) de la porte (110) comportant une pluralité d'éléments allongés indépendants (132) s'étendant entre la région de verrouillage à clé (140) et la région de fixation (120) ;
dans lequel la région de fixation (120) est accouplée de manière pivotante à la région de pivot (160) du cadre (150) dans les configurations ouverte et fermée ;
dans lequel la région de verrouillage à clé (140) comporte une région concave partiellement fermée (142) dont la forme correspond à la région à clavette (180) du cadre (150) ; **caractérisé en ce que**
la région de verrouillage (140), la région de la porte (130) et la région de fixation (120) de la porte (110) sont solidaires, dans lequel la région de verrouillage (140) de la porte (110) comporte une région en forme de U orthogonal sensiblement rectangulaire (148) définie à l'extérieur entre les éléments allongés (132) de la région de la porte (130).

2. Système de mousqueton selon la revendication 1, dans lequel la porte (110) est sans fil.

3. Système de mousqueton selon la revendication 1, dans lequel les éléments allongés (132) comportent uniquement des régions en coupe transversale non circulaires.

4. Système de mousqueton selon la revendication 1, dans lequel les régions (120, 130, 140) de la porte (110) sont moulées.

5. Système de mousqueton selon la revendication 1, dans lequel la région à clavette (180) du cadre (150) est sans crochet.

6. Système de mousqueton selon la revendication 1, dans lequel l'accouplement entre la région de verrouillage à clé (140) et la région à clavette (180) dans la configuration fermée comporte un accouplement mâle-femelle.

7. Système de mousqueton selon la revendication 1, dans lequel la pluralité d'éléments allongés (132) de la région de porte (130) comportent des régions d'épaisseurs variables.

8. Système de mousqueton selon la revendication 1, dans lequel la région externe en forme de U (148) de la région de verrouillage à clé (140) de la porte (110) comporte une première ouverture plus petite (144) et une seconde ouverture plus grande (146), et dans lequel les première et seconde ouvertures correspondent en forme à la région à clavette (180) du cadre.

9. Système de mousqueton selon la revendication 8, dans lequel la première ouverture plus petite (144) est distale par rapport à la région de porte (130) de la porte (110) par rapport à la seconde ouverture plus grande (146).

10. Système de mousqueton selon la revendication 1, dans lequel la région de fixation (120) de la porte (110) comporte deux régions sensiblement orthogonales accouplées à la région de pivot (160) du cadre (150).

11. Système de mousqueton selon la revendication 10, dans lequel les deux régions sensiblement orthogonales sont sensiblement orthogonales aux éléments allongés (132).

12. Système de mousqueton selon la revendication 11, dans lequel l'accouplement pivotant entre la région de fixation (120) et la région de pivot (160) comporte l'accouplement des régions sensiblement orthogonales de la porte (110) dans une pluralité d'évidements du cadre.

13. Système de mousqueton selon la revendication 12, dans lequel la pluralité d'évidements sont décalés et disposés sur la région de fixation (120) du cadre (150).

14. Système de mousqueton selon la revendication 1, dans lequel la porte (110) est sensiblement composée d'un seul matériau.

15. Système de mousqueton selon la revendication 1, dans lequel la région de fixation (120), la région de porte (130) et la région de clé à verrouillage (140) de la porte (110) sont moulées sans accouplement par compression.

16. Système de mousqueton selon la revendication 1, dans lequel le système de sollicitation de porte est configuré pour générer une force de sollicitation poussant la porte (110) vers la configuration fermée.

17. Système de mousqueton selon la revendication 16, dans lequel la force de sollicitation correspond à une distance entre la région de verrouillage à clé (140)

18. Système de mousqueton selon la revendication 1, dans lequel la région de verrouillage à clé (140) est sans crochet, la région de verrouillage à clé, la région de porte et la région de fixation de la porte étant moulées.
